# EUROPÄISCHE PATENTSCHRIFT

(11) **EP 2 459 906 B1**
(45) Veröffentlichungstag und Bekanntmachung des Hinweises auf die Patenterteilung: **11.03.2015**
(21) Anmeldenummer: 10752280.7
(22) Anmeldetag: 26.07.2010
(51) Int. Cl.: F16J 15/32

(54) **DICHTUNGSANORDNUNG**
SEAL ARRANGEMENT
ENSEMBLE AVEC JOINT D'ÉTANCHÉITÉ

(30) Priorität: 30.07.2009 DE 102009028131
(43) Veröffentlichungstag der Anmeldung: 06.06.2012
(73) Patentinhaber: Trelleborg Sealing Solutions Germany GmbH, 70565 Stuttgart (DE)
(72) Erfinder: FRANZ, Martin, 72827 Wannweil (DE)
(74) Vertreter: Kohler Schmid Möbus
(86) Internationale Anmeldenummer: PCT/DE2010/050051
(87) Internationale Veröffentlichungsnummer: WO 2011/012129

(56) Entgegenhaltungen:
- EP-A1- 1 760 371
- WO-A1-2005/036033
- DE-A1-102008 017 347
- DE-B- 1 088 300
- DE-C1- 3 212 476
- US-A- 2 743 950

## Beschreibung

Die Erfindung betrifft eine Dichtungsanordnung mit einer Dichtung zur Abdichtung einer Dichtfläche zwischen einem eine Dichtungsaufnahmestruktur" bevorzugt eine Nut, aufweisenden ersten Maschinenteil und einem die Dichtfläche aufweisenden, relativ zu dem ersten Maschinenteil beweglichen zweiten Maschinenteil, wobei durch die Dichtung ein Hochdruckbereich zwischen den Maschinentellen gegen einen Niederdruckbereich abgedichtet Ist.

Gattungsgemäße Dichtungsanordnungen weisen eine Dichtung mit einem Halteelement zur Lagefixierung der Dichtung in der Dichtungsaufnahmestruktur und eine an das Halteelement angeformte Dichtlippe aus einem Elastomermaterial, also einem gummielastischen Material, z.B. Polyurethan oder Gummi, mit einer an einem freien Ende der Dichtlippe ausgeformten Dichtkante zur Anlage an die Dichtfläche auf. Die Dichtlippe weist einen an den Hochdruckbereich angrenzenden Hochdruckoberflächenbereich und einen an den Niederdruckbereich angrenzenden Niederdruckoberflächenbereich auf. Die Dichtungen sind üblicherweise als Dichtungsring ausgebildet und können sowohl als Rotationsdichtungen (Radialwellendichtung) als auch als Kolbendichtungen, also als translatorische Abdichtung, verwendet werden. Im Falle der Verwendung als Rotationsdichtung ist eines der beiden Maschinenteile als innerhalb einer Durchführung In dem anderen Maschinenteil rotierbar gelagerte Welle ausgebildet. Im Falle der Verwendung als Kolbendichtungen bewegen sich die beiden Maschinentelle relativ zueinander axial hin und her. Die Dichtungen sind also als Stangen- oder Kolbendichtungen für die Abdichtung in Hydraulik-, Pneumatikanwendungen, z.B. Pneumatikzylindern oder Ventilen, und/oder als Rotationsdichtungen, z.B. In Hochdruckanwendungen, einsetzbar.

Eine derartige Dichtung wird üblicherweise zwischen zwei zueinander axial und/oder drehend bewegten Maschinentellen In einer Nut in einer Oberfläche eines der Maschinenteile eingesetzt, wobei diese Oberfläche einer der von einer Oberfläche des zweiten Maschinenteil ausgebildeten Dichtfläche gegenüberliegend angeordnet ist. Zwischen den genannten Oberflächen befindet sich ein abzudichtender Dichtspalt. Im Falle eines Dichtrings sind die beiden Oberflächen konzentrisch zueinander ausgerichtet. Üblicherweise ist die Nut in diesem Fall In der entsprechenden Oberfläche des äußeren Maschinenteils angeordnet. Die Nut kann jedoch auch im inneren Maschinenteil angeordnet sein. Die nachgiebige Dichtlippe wirkt wie eine Feder zwischen der Dichtkante und dem Halteelement, so dass die Dichtkante vorgespannt an der Dichtfläche anliegt. Das Halteelement ist derart dimensioniert, dass es einen möglichst lagefixierten Sitz der Dichtung z.B. am Nutgrund ermöglicht.

Beim Einsatz einer derartigen Dichtung, z.B. in einem Hydraulik-, Pneumatikzylinder oder Wellenabdichtung wie z.B. einer Antriebswelle eines Motors, wird die Dichtung während des Betriebes auf ihrem Hochdruckflächenbereich mit einem unter Druck stehenden Medium, d.h. einem Fluid, z.B. ÖI und/oder Luft, beaufschlagt, das sich In dem Hochdruckbereich Innerhalb des Zylinders oder des Motors befindet. Um die gewünschte Dichtwirkung zu erzieien, Ist die Dichtung mit Vorspannung in der Dichtungsaufnahmestruktur eingelegt.

Da die Dichtlippe elastisch ist, führt eine Druckbeaufschlagung des Hochdruckflächenbereiches dazu, dass die Dichtkante stärker an die Dichtfläche gedrückt wird. Im statischen Fall wird dadurch die Dichtkraft erhöht. Im dynamischen Fall kann durch die Erhöhung der Dichtkraft die Dichtkante derart verformt werden, dass durch eine ungünstige Pressungsverteilung eine Verminderung der Dichtfunktion der Dichtkante eintritt. Weiter kann die Lichtlippe sich derart verformen, dass die Dichtkante von der Dichtfläche abhebt. Letzteres kann Insbesondere dadurch verursacht werden, dass die Dichtlippe auf Seite ihres Niederdruckflächenbereiches, also ihrem nach außen in Richtung Niederdruckbereich gerichteten, üblicherweise an die Umgebungsluft angrenzenden Flächenbereich elastisch und/oder plastisch verformt wird und dadurch nachgibt.

Diese Fehlfunktionen der Dichtung beim Betrieb, z.B. eines Pneumatikzylinders oder des Motors, führen zu Leckagen des Hochdruckbereiches und/oder können durch eine ungewünschte Verformung im Dichtkantenbereich zum Abreißen eines Schmierfilmes zwischen den Dichtflächen führen, so dass ein erhöhter Verschleiß der Oberfläche der Dichtflächen auftreten kann.

Aus der DE 32 12 476 C1 ist eine Dichtungsanordnung mit einer weniger verschleißanfälligen Dichtung bekannt. Die Dichtung weist einen von dem zweiten Maschinenteil beabstandet angeordneten Stützkörper auf, welcher eine niederdruckoberflächenseitige Abstützung der Dichtlippe ausbildet. Die Abstützung teilt einen Hochdruckoberflächenbereich der Dichtlippe in einen dichtkantenseitige Teilfläche und eine halteelementseitige Tellfläche. Zwischen der Dichtkante und dem Stützkörper sowie zwischen dem Stützkörper und dem Halteelement ergibt sich so jeweils ein Drehpunkt, um den die Dichtlippe bei Wellenschlägen der Welle gegenüber dem Halteelement ausgelenkt werden kann. Dadurch wird ein Verschleiß der Dichtkante bei Wellenschlägen verringert. Bei Druckbeaufschlagung des Hochdruckoberflächenbereichs der Dichtlippe wird diese um den dichtkantenseitigen Drehpunkt gegenüber dem Halteelement ausgelenkt und dabei deren Dichtkante in Abhängigkeit des lediglich an der dichtkantenseitige Teilfläche angreifenden Drucks gegen die Dichtfläche gepresst.

Aus der DE 25 46 588 A1 ist eine Dichtungsanordnung mit einem Dichtring bekannt, der eine an ein Halteelement angeformten Dichtlippe aufweist, die an ihrem freien Ende mit einer Dichtkante versehen ist. Der Dichtring ist zwischen der Dichtkante und dem Halteelement zwischen einem radial inneren und einem radial äußeren ringförmigen Stützkörper eingespannt. Der radial innere Stützkörper bildet dabei eine niederdruckoberflächenseitige, Im Wesentlichen parallel zur Dichtkante verlaufende Abstützung der Dichtlippe aus, wobei die Abstützung den Hochdruckoberflächenbereich der Dichtlippe In eine halteelementseitige und in eine dichtkantenseitige Teilfläche aufteilt. Der Niederdruckoberflächenbereich der Dichtlippe grenzt zwischen der Abstützung und dem Halteelement an einen von der Dichtlippe und einem abzudichtenden Maschinenteil begrenzten Freiraum an, In den die Dichtlippe durch deren Verformung hineindrückbar ist. Die halteelementseitige Teilfläche des Hochdruckoberflächenbereichs ist dabei größer, als die dichtkantenseitige Teilfläche. Bei dieser Dichtungsanordnung kann die Dichtlippe Wellenschlägen einer abzudichtenden Welle gut folgen. Im druckaktivierten Zustand der Dichtung wird die Dichtlippe In den Freiraum hinein verformt, wodurch die über die Stützkörper ausgesteifte Dichtlippe mit der Dichtkante axial verschoben wird. die Dichtkante wird bei zunehmendem Druck immer verstärkt gegen die Dichtfläche der Welle gepresst, wodurch sich u.a. der Verschleiß des Dichtrings erhöhen kann.

Aus der EP 1 760 371 A1 ist eine Dichtungsanordnung mit einer Radial-Wellendichtung bekannt, bei der einen Stützkörper eine niederdruckoberflächenseitige Abstützung der Dichtlippe ausbildet, die zwischen der Dichtkante und dem Halteelement angeordnet Ist. Die Abstützung teilt dabei einen Hochdruckoberflächenbereich der Dichtlippe In eine halteelementseitige und in eine dichtkantenseltige Teilfläche auf. Eine Druckbeaufschlagung des Hochdruckoberflächenbereichs der Dichtlippe kann auch bei dieser Dichtung, Insbesondere bei Druckspitzen, zu einer verschleißträchtigen Belastung der Dichtkante führen. Die Wo 2005/036033 A1 offenbart eine Dichtungsanordnung, bei der zwischen einem Stützkörper, der eine niederdruckseitige Abstützung der Dichtlippe bildet, und der Dichtlippe ein geringer Spalt ausgebildet Ist. Die Dichtkante könnte bei Druckbeaufschlagung deren Hochdruckoberflächenbereichs unter Verformung der Dichtlippe in den Freiraum zunächst entlastet werden. Bei weiter ansteigenden Drücken liegt die Dichtlippe dem Stützkörper vollflächig an und die Dichtkante wird zunehmend stark gegen deren zugeordnete Dichtfläche gepresst. Vergleichbare Dichtungsanordnungen sind aus der DE 10, 88 300 B, der US 2 743 950 A und der DE 10 2008 017347 A1 bekannt geworden.

Der Erfindung liegt die Aufgabe zugrunde, eine Dichtungsanordnung bereitzustellen, welcher Nachteile des Standes der Technik vermeldet, insbesondere eine verringerte Verschleißanfälligkeit der Dichtung bei zugleich hoher Zuverlässigkeit der Dichtfunktion aufweist.

Diese Aufgabe wird durch den Gegenstand des unabhängigen Patentanspruchs gelöst. Die abhängigen Ansprüche stellen bevorzugte Ausführungsformen der Erfindung dar.

Eine erfindungsgemäße Dichtungsanordnung weist ein eine Dichtungsaufnahmestruktur, bevorzugt eine Nut, aufweisendes erstes Maschinenteil und ein eine Dichtfläche aufweisendes, relativ zu dem ersten Maschinenteil bewegliches zweites Maschinenteil und eine Dichtung zur Abdichtung einer Dichtfläche zwischen dem ersten Maschinenteil und dem zweiten Maschinenteil auf. Dabei ist durch die Dichtung ein Hochdruckbereich zwischen den Maschinentellen gegen einen Niederdruckbereich abdichtbar. Als Hochdruckbereich wird der Bereich bezeichnet, der einen höheren Druck aufweist, d.h. die Begriffe Hochdruckbereich und Niederdruckbereich sind relativ zueinander zu verstehen. Absolut z.B. relativ zum Atmosphärendruck muss kein Hochdruck im Hochdruckbereich herrschen. Es kann z.B. auch relativ zum Atmosphärendruck ein Überdruck im Niederdruckbereich herrschen, wobei dann im Hochdruckbereich ein den Überdruck übersteigender Druck herrscht.

Beim Betrieb einer Dichtungsanordnung mit einer Dichtung können sich die Druckverhältnisse auch ändern, so kann auftreten, dass die beiden Druckbereiche in ihrer Lage relativ zur Dichtlippe und zur Dichtkante vertauscht werden. Unter Hochdruckbereich Ist dann der momentane Bereich mit einem höheren Druck als im Niederdruckbereich zu verstehen. Die Dichtung weist ein Halteelement auf, mit dem die Dichtung lagefixiert in der Dichtungsaufnahmestruktur angeordnet Ist. An das Halteelement Ist eine Dichtlippe aus einem Elastomermaterial mit einer, bevorzugt dynamischen, an einem freien Ende der Dichtlippe ausgeformten Dichtkante angeformt, die der Dichtfläche anliegt. Als Dichtkante wird dabei eine Kante der Dichtlippe bezeichnet, die zur Anlage an die Dichtfläche als Abdichtung eines Dichtspaltes zwischen der Dichtfläche und der Dichtungsaufnahmestruktur ausgebildet ist. Die Dichtlippe weist einen an den Hochdruckbereich angrenzenden Hochdruckoberflächenbereich und einen an den Niederdruckbereich angrenzenden Niederdruckoberflächenbereich auf. Der Hochdruckoberflächenbereich und der Niederdruckoberflächenbereich sind sich zumindest teilweise gegenüberliegend angeordnet. Der Niederdruckoberflächenbereich grenzt an einen Freiraum an, In dessen Richtung, bzw. In den hinein, die Dichtlippe durch deren Verformung hineingedrückt werden kann. Der Freiraum kann dabei z.B. mit Luft gefüllt sein. Er kann jedoch auch mit einem elastisch komprimierbaren Material ausgefüllt sein. Der Freiraum Ist erfindungsgemäß einerseits durch den Niederdruckoberflächenbereich des Dichtrings, andererseits durch das zweite Maschinenteil begrenzt.

Die Dichtung weist im Bereich ihrer Dichtlippe nur einen Stützkörper auf, der eine niederdruckoberflächenseitige, im Wesentlichen parallel zur Dichtkante verlaufende Abstützung der Dichtlippe ausbildet und wobei die Abstützung zwischen der Dichtkante und dem Halteelement angeordnet ist.

Durch die Abstützung des Stützköpers an der Niederdruckoberflächenseite kann ein übermäßiges Andrücken der Dichtlippe und damit der Dichtkante an die Dichtfläche vermieden werden. Die Abstützung teilt die Dichtlippe und damit auch deren Hochdruckoberflächenbereich in einen dichtkantenseitigen und eine halteelementseitigen Bereich auf. Die halteelementseitige Teilfläche des Hochdruckoberflächenbereichs ist erfindungsgemäß größer als die dichtkantenseitige Teilfläche. Bei Beaufschlagung des Hochdruckoberflächenbereiches mit Druck kann deshalb durch den Druck ein die Dichtkante entlastendes, um die Abstützung wirkendes Kippmoment auf die Dichtlippe ausgeübt werden. Dieses Kippmoment bewirkt Zugspannungen innerhalb des Materials der Dichtlippe die zu einer Entlastung der Dichtkante führen.

Die erfindungsgemäße Abstützung führt deshalb dazu, dass eine die Dichtwirkung der Dichtkante störende Verformung der Dichtlippe vermieden wird. Dadurch kann ein unerwünschtes übermäßiges Andrücken der Dichtkante an die Dichtfläche vermieden werden.

Die Dichtung Ist ringförmig als Radialwellendichtring ausgebildet. Die erfindungsgemäße Dichtung ist dadurch z.B. als Rotationsdichtung verwendbar.

Vorteilhaft ist der Stützkörper teilweise In die Dichtlippe eingebettet. Die Ausformung der Einbettung bildet dabei eine eine Drehachse definierende Oberfläche der Dichtlippe aus um die das Kippmoment wirken kann.

Die Dichtlippe kann in ihrem Bereich, der an die Abstützung angrenzt, materialverstärkt ausgebildet sein, d.h. die Dichtlippe kann dort verdickt sein, wodurch unerwünschte Verformungen vermieden werden können.

In einer sehr einfachen Ausführungsform weist der Stützkörper einen kreisrunden Querschnitt auf. Wenn der Stützkörper einen Im Wesentlichen T-förmigen Querschnitt aufweist, wobei der Querbalken des T zumindest teilweise aus dem Niederdruckoberflächenbereich heraussteht, wird eine Aussteifung der Dichtlippe an dem an den Querbalken angrenzenden Bereich erreicht. Vorstellbar sind alle Querschnittsformen des Stützkörpers welche eine stützende Wirkung für die Dichtlippe in Richtung des Stützkörpers erreichen.

Bevorzugt weist das Halteelement ein bevorzugt im Querschnitt L-förmiges Versteifungselement auf. Das Versteifungselement kann dabei z.B. aus Metall oder einem steifen Verbundwerkstoff hergestellt sein. Durch das Versteifungselement wird eine Verformung des Halteelementes während des Betriebes der Maschinenteile weitestgehend verhindert. Weiter wird ein passgenauer und sicherer Sitz in der Dichtungsaufnahmestruktur gewährleistet.

Wenn der Stützkörper sich unmittelbar an das Versteifungselement anschließend oder einstückig mit dem Versteifungselement ausgeführt ist, wobei die Abstützung von einem freien Ende des Versteifungselementes ausgebildet Ist, wird das Einlegen der Dichtung in die Dichtungsaufnahmestruktur sehr einfach ermöglicht, da dann die gesamte Dichtung als nur ein Bauteil in nur einem Arbeitsschritt einlegbar ist. Weiter wird ein Verrutschen des Stützkörpers innerhalb der Dichtungsanordnung verhindert.

Vorteilhaft Ist das Versteifungselement zumindest teilweise von dem Elastomermaterial der Dichtlippe umschlossen, so dass ein sicherer Halt des Versteifungselementes innerhalb des Halteelements und damit eine dauerhafte Positionierung zur Dichtlippe gewährleistet ist.

Die erfindungsgemäße Dichtung kann einfach und günstig hergestellt werden wenn, der Stützkörper und/oder das Versteifungselement aus

Metall oder aus Kunststoff, z.B. Polytetrafluorethylen (PTFE), oder Keramik hergestellt sind. Der Stützkörper Ist also als ein starrer Körper ausgebildet.

Eine erfindungsgemäße Dichtungsanordnung weist einen eine Dichtungsaufnahmestruktur, bevorzugt eine Nut, aufweisenden ersten Maschinenteil und einen eine Dichtfläche aufweisenden, relativ zu dem ersten Maschinenteil beweglichen zweiten Maschinenteil sowie eine In die Dichtungsaufnahmestruktur eingelegte erfindungsgemäße Dichtung auf. Die Dichtung Ist mit Ihrem Halteelement lagefixiert in der Dichtungsaufnahmestruktur angeordnet. Die Dichtkante der Dichtung liegt durch die Elastizität des Elastomermaterials der Dichtlippe der Dichtung vorgespannt an die Dichtfläche an. Durch die Dichtung Ist ein Hochdruckbereich zwischen den Maschinenteilen gegen einen Niederdruckbereich abgedichtet.

Der erfindungsgemäße Stützkörper der Dichtung bildet eine niederdruckoberflächenseitige, d.h. auf einem Niederdruckoberflächenbereich der Dichtlippe liegende, im Wesentlichen parallel zur Dichtkante verlaufende Abstützung der Dichtlippe aus. Dadurch, dass die Abstützung zwischen der Dichtkante und dem Halteelement angeordnet ist; kann eine auf den Hochdruckoberflächenbereich der Dichtlippe wirkende z.B. Druckkraft ein die Dichtkante entlastendes Kippmoment auf die Dichtlippe ausüben.

Die Erfindung wird nachfolgend anhand von Ausführungsbeispielen unter Bezugnahme auf die Zeichnungen näher erläutert.

Die Figuren 1 bis 5 zeigen jeweils einen Querschnitt durch eine erfindungsgemäße Dichtungsanordnung bei der ein übermäßiges Andrücken der Dichtkante durch einen Stützkörper vermieden wird.

Die Figur 6 zeigt einen perspektivische dargesellten Ausschnitt einer erfindungsgemäßen Dichtungsanordnung mit einer als Dichtring ausgebildeten erfindungsgemäßen Dichtung mit einem Querschnitt gemäß Figur 1.

Die Darstellungen der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass Ihr Aufbau gut gezeigt werden kann.

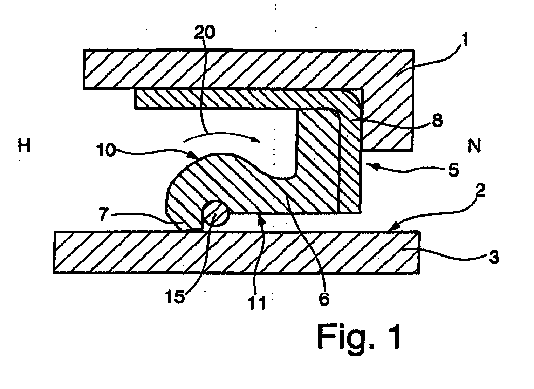

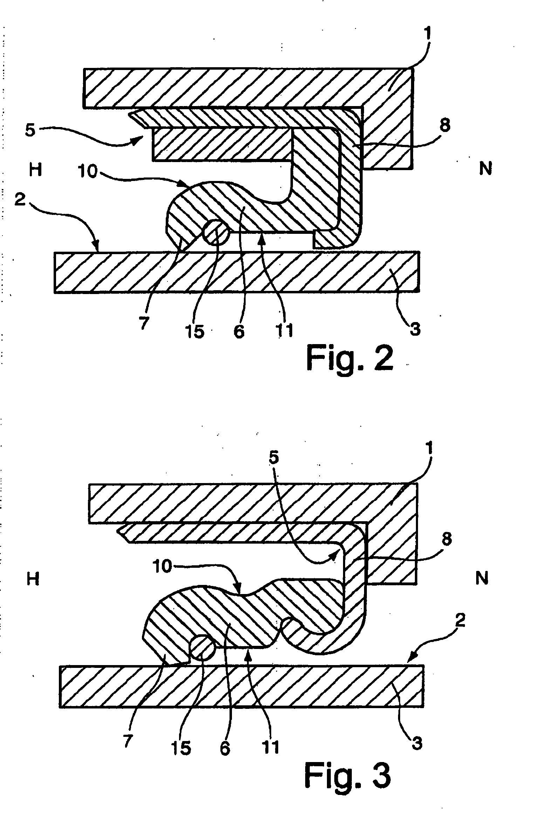

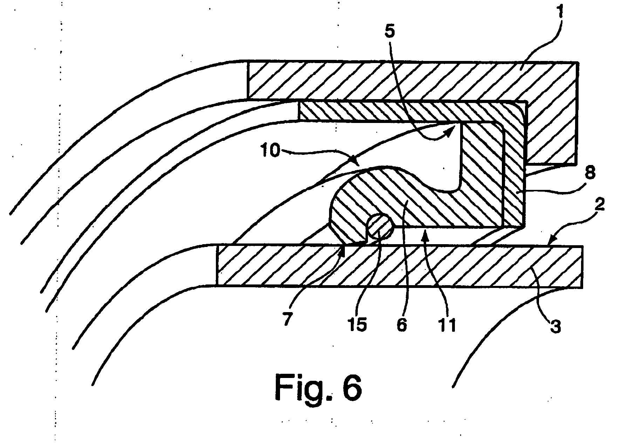

In den Figuren 1 bis 5 ist jeweils eine erfindungsgemäße als Dichtungsanordnung im Querschnitt dargestellt, wobei lediglich eine zu einer Rotationsachse symmetrische Halfte des Querschnittes gezeigt Ist. Die Dichtungsanordnungen weisen jeweils einen ersten Maschinenteil 1 und einen, eine abzudichtende Dichtfläche 2 aufweisenden, relativ zu dem ersten Maschinenteil 1 beweglichen zweiten Maschinenteil 3 auf. Am ersten Maschinenteil 1 ist eine Dichtungsaufnahmestruktur vorgesehen, die eine winkelförmige Anlagefläche zur Anlage eines Halteelements 5 einer erfindungsgemäßen als Dichtring ausgebildeten Dichtung zur Lagefixierung der Dichtung In der Dichtungsaufnahmestruktur aufweist. An das Halteelement 5 schließt sich jeweils eine Dichtlippe 6 mit einer Dichtkante 7 an. Das Halteelement 5 der Dichtungen weist jeweils ein Versteifungselement 8 auf, wobei in den Ausführungsformen der Figuren 1 bis 11 das Versteifungselement 8 einen Im Wesentlichen L-förmigen Querschnitt aufweist. In den Ausführungsformen der Figuren 6 und 7 ist das Versteifungselement 8 vollständig von dem Elastomermaterial der Dichtlippe 6 umschlossen. Das Halteelement 5 dieser Ausführungsformen ist daher als von dem Elastomermaterial umschlossenes Versteifungselement 8 ausgeführt.

Durch die Dichtung ist jeweils ein Hochdruckbereich zwischen den Maschinenteilen 1,3 gegen einen Niederdruckbereich abgedichtet. Der Hochdruckbereich (H) Ist In den Figuren jeweils auf der linken Seite der Darstellung angeordnet und der Niederdruckbereich (N) Ist jeweils auf der rechten Seite angeordnet. Der Hochdruckbereich wird z.B. von dem Innenraum eines Motorgehäuses oder eines Druckzylinders ausgebildet in denen sich üblicherweise Öl befindet. Die Dichtung dient also dazu ölleckagen aus einem derartigen Innenraum zu vermeiden.

Die an das Halteelement 5 angeformte Dichtlippe 6 aus einem Elastomermaterial weist jeweils die an einem freien Ende ausgeformte Dichtkante 7 zur Anlage an die Dichtfläche 2 auf. An der Dichtlippe 6 ist ein an den Hochdruckbereich angrenzender Hochdruckoberflächenbereich 10 und ein dem Hochdruckoberflächenbereich 10 teilweise gegenüberliegender, an den Niederdruckbereich angrenzender Niederdruckoberflächenbereich 11 ausgebildet.

Die Dichtung weist jeweils einen Stützkörper 15 auf, wobei der Stützkörper 15 eine niederdruckoberflächenseitige, Im Wesentlichen parallel zur Dichtkante 7 verlaufende Abstützung der Dichtlippe 6 ausbildet. Die Abstützung ist zwischen der Dichtkante 7 und dem Halteelement 5 angeordnet. Bei Beaufschlagung des Hochdruckoberflächenbereiches 10 mit Druck wird derart durch von dem Druck erzeugte Druckkräfte auf die Oberflächenbereiche des Hochdruckoberflächenbereiches 10 zu beiden Seiten der Abstützung ein die Dichtkante 7 entlastendes, um die Abstützung wirkendes Kippmoment auf die Dichtlippe 6 ausgeübt. D.h. es werden Zugspannungen innerhalb der Dichtlippe von den Druckkräften hervorgerufen. Das Kippmoment ist in Figur 1 durch einen gebogenen Pfeil 20 symbolisiert eingezeichnet. Damit das Kippmoment in die gewünschte Richtung, nämlich die Dichtkante 7 entlastend, wirkt, ist die Abstützung so positioniert, dass die Teilflächen des Hochdruckoberflächenbereichs 10 der Dichtlippe 6, also die Fläche auf die im Hochdruckbereich Druckkräfte wirken, zu beiden Seiten der Abstützung unterschiedlich groß sind. Die halteelementseitige Teilfläche ist dabei größer als die dichtkantenseitige Teilfläche.

Die Dichtlippe 6 der Ausführungsform der Dichtung gemäß Figur 1 ist In ihrem an die vom Stützkörper 15 ausgebildete Abstützung angrenzenden Bereich materialverstärkt ausgeführt. Dort ist das Material der Dichtlippe 6 dicker ausgebildet als in dem an das Halteelement 5 angrenzenden Bereich der Dichtlippe 6.

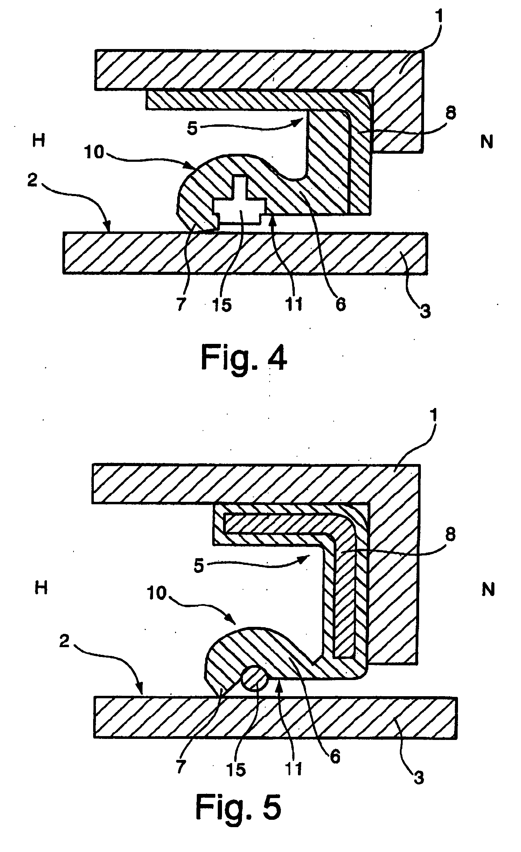

Bei den Ausführungsformen der erfindungsgemäßen Dichtungen gemäß den Figuren 1 bis 5 ist der Stützkörper 15 als ein vom Halteelement 5 abgesetzter Ring z.B. aus Stahl ausgebildet. Mit Ausnahme der Dichtung gemäß Figur 4 weisen die Stützkörper 15 dabei einem kreisrunden Querschnitt auf. Der Stützköper 15 gemäß Figur 4 weist dagegen einen Im Wesentlichen T-förmigen Querschnitt auf. Der Querbalken des T steht dabei teilweise aus dem Niederdruckoberflächenbereich 11 der Dichtlippe 6 heraus. Der Stützkörper 15 ist jeweils teilweise in die Dichtlippe 6 eingebettet. Dabei muss kein fester, d.h. materialschlüssiger Verbund zwischen Dichtlippe 6 und Stützkörper 15 bestehen.

In Figur 6 Ist ein perspektivisch dargestellter Ausschnitt einer erfindungsgemäßen Dichtungsanordnung mit einem Querschnitt gemäß Figur 1 dargestellt. Die erfindungsgemäße Dichtung Ist als Dichtring ausgebildet. In der Figur ist durch die perspektivische Darstellung zu erkennen, dass die vom Stützkörper 15 ausgebildete Abstützung parallel zur Dichtkante 7 verläuft. Dies bedeutet, dass im Falle eines Dichtringes die Dichtkante 7 und die Abstützung konzentrisch zueinander verlaufende Kreise ausbilden. Das zweite Maschinenteil 3 Ist als ein Hohlzylinder ausgebildet. Dieser Hohlzylinder kann z.B. auf eine Antriebswelle eines Motors aufgeschrumpft sein. Der Hohlzylinder kann jedoch auch selbst als eine Hohlwelle verwendet sein. Das zweite Maschinenteil 3 kann selbstverständlich auch als ein massiver Metallzylinder ausgebildet sein, d.h. z.B. eine Antriebswelle eines Motors darstellen.

## Patentansprüche

1. Dichtungsanordnung mit einem eine Dichtungsaufnahmestruktur, bevorzugt eine Nut, aufweisenden ersten Maschinenteil (1) und einem eine Dichtfläche (2) aufweisenden relativ zu dem ersten Maschinenteil (1) beweglichen zweiten Maschinenteil (3) und mit einer Dichtung zur Abdichtung der Dichtfläche (2) zwischen dem ersten Maschinenteil (1) und dem zweiten Maschinenteil (3),
wobei die Dichtung ringförmig als Radialwellendichtring ausgebildet ist, wobei die Dichtung ein Halteelement (5) aufweist, mit dem die Dichtung lagefixiert in der Dichtungsaufnahmestruktur angeordnet ist, wobei die Dichtung eine an das Halteelement (5) angeformte Dichtlippe (6) aus einem Elastomermaterial mit einer an einem freien Ende der Dichtlippe (6) ausgeformten Dichtkante (7) aufweist,
wobei die Dichtkante (7) durch die Elastizität des Elastomermaterials der Dichtlippe (6) der Dichtung vorgespannt an der Dichtfläche (2) anliegt, derart, dass durch die Dichtung ein Hochdruckbereich zwischen den Maschinenteilen (1,3) gegen einen Niederdruckbereich abgedichtet ist,
wobei die Dichtlippe (6) einen an den Hochdruckbereich angrenzenden Hochdruckoberflächenbereich (10) und einen an den Niederdruckbereich angrenzenden Niederdruckoberflächenbereich (11) aufweist,
**dadurch gekennzeichnet, dass**
die Dichtung im Bereich ihrer Dichtlippe nur einem starren Stützkörper (15) aufweist, wobei der Stützkörper eine niederdruckoberflächenseitige, im Wesentlichen parallel zur Dichtkante (7) verlaufende Abstützung der Dichtlippe (6) ausbildet,
wobei die Abstützung zwischen der Dichtkante (7) und dem Halteelement (5) angeordnet ist und den Hochdruckoberflächenbereich (10) der Dichtlippe (6) in eine halteelementseitige und in eine dichtkantenseitige Teilfläche aufteilt,
wobei der Niederdruckoberflächenbereich (11) der Dichtlippe (6) zwischen der Abstützung und dem Halteelement (5) an einen Freiraum angrenzt, in den die Dichtlippe (6) durch deren Verformung hineindrückbar ist,
wobei der Freiraum vom Niederdruckoberflächenbereich (11) der Dichtlippe (6) und dem zweiten Maschinenteil begrenzt ist, und wobei die halteelementseitige Teilfläche des Hochdruckoberflächenbereichs (10) größer ist, als die dichtkantenseitige Teilfläche, so dass bei Beaufschlagung des Hochdruckoberflächenbereichs (10) mit Druck ein die Dichtkante (7) entlastendes, um die Abstützung wirkendes, Kippmoment auf die Dichtlippe (6) ausgeübt wird.

2. Dichtungsanordnung nach Anspruch 1,
**dadurch gekennzeichnet, dass**
der Stützkörper (15) zumindest teilweise in die Dichtlippe (6) eingebettet ist.

3. Dichtungsanordnung nach Anspruch 1 oder 2,
**dadurch gekennzeichnet, dass**
die Dichtlippe (6) in ihrem Bereich, der an die Abstützung angrenzt, materialverstärkt ausgebildet ist.

4. Dichtungsanordnung nach einem der Ansprüche 1 bis 3,
**dadurch gekennzeichnet, dass**
der Stützkörper (15) einen kreisrunden Querschnitt aufweist oder dass der Stützkörper (15) einen im Wesentlichen T-förmigen Querschnitt aufweist, wobei der Querbalken des T zumindest teilweise aus dem Niederdruckoberflächenbereich (11) heraus steht.

5. Dichtungsanordnung nach einem der Ansprüche 1 bis 4,
**dadurch gekennzeichnet, dass**
das Halteelement (5) ein bevorzugt im Querschnitt L-förmiges Versteifungselement (8) aufweist.

6. Dichtungsanordnung nach Anspruch 6,
**dadurch gekennzeichnet, dass**
das Versteifungselement (8) zumindest teilweise von dem Elastomermaterial der Dichtlippe (6) umschlossen ist.

7. Dichtungsanordnung nach einem der Ansprüche 1 bis 7,
**dadurch gekennzeichnet, dass**
der Stützkörper (15) und/oder das Versteifungselement (8) aus Metall oder aus Kunststoff oder aus einer Keramik hergestellt sind.

## Claims

1. Sealing arrangement with a first machine part (1) comprising a seal accommodating structure, preferably a groove, a second machine part (3), which comprises a sealing surface (2) and can be moved relative to the first machine part (1), and a seal for sealing the sealing surface (2) between the first machine part (1) and the second machine part (3), wherein the seal is designed in an annular shape as a radial shaft seal, the seal comprising a retaining element (5) which disposes the seal in the seal accommodating structure such that it is fixed in position, wherein the seal has a sealing lip (6) which is formed on the retaining element (5) and is made from an elastomeric material having a sealing edge (7) formed at a free end of the sealing lip (6), wherein the sealing edge (7) abuts the sealing surface (2) in a pretensioned state due to the elasticity of the elastomeric material of the sealing lip (6) of the seal in such a fashion that the seal seals a high pressure area between the machine parts (1, 3) from a low-pressure area,
wherein the sealing lip (6) has a high-pressure surface area (10) bordering the high-pressure area, and a low-pressure surface area (11) bordering the low-pressure area, **characterized in that** the seal has only one rigid supporting element (15) in the area of its sealing lip, wherein the supporting element forms a support of the sealing lip (6) on the low-pressure surface side, the support extending substantially parallel to the sealing edge (7),
wherein the support is disposed between the sealing edge (7) and the retaining element (5) and divides the high-pressure surface area (10) of the sealing lip (6) into a partial surface on the retaining element side and a partial surface on the sealing edge side,
wherein the low-pressure surface area (11) of the sealing lip (6) borders a free space between the support and the retaining element (5), into which free space the sealing lip (6) can be pressed due to its deformation,
wherein the free space is delimited by the low-pressure surface area (11) of the sealing lip (6) and the second machine part, and
wherein the partial surface of the high-pressure surface area (10) on the retaining element side is larger than the partial surface on the sealing edge side such that, upon pressurization of the high-pressure surface area (10), a tilting moment, which acts about the support and relieves the sealing edge (7), acts on the sealing lip (6).

2. Sealing arrangement according to claim 1, **characterized in that** the supporting element (15) is at least partially embedded in the sealing lip (6).

3. Sealing arrangement according to claim 1 or 2,
**characterized in**
**that** the sealing lip (6) is reinforced with material in its area bordering the support.

4. Sealing arrangement according to any one of the claims 1 through 3, **characterized in that** the supporting element (15) has a circular cross-section or the supporting element (15) has a substantially T-shaped cross-section, wherein the horizontal line of the T at least partially projects past the low-pressure surface area (11).

5. Sealing arrangement according to any one of the claims 1 through 4, **characterized in that** the retaining element (5) has a reinforcing element (8) which preferably has an L-shaped cross-section.

6. Sealing arrangement according to claim 5, **characterized in that** the reinforcing element (8) is at least partially enclosed by the elastomeric material of the sealing lip (6).

7. Sealing arrangement according to any one of the claims 1 through 6, **characterized in that** the supporting element (15) and/or the reinforcing element (8) are made from metal or plastic material or ceramic material.

## Revendications

1. Système d'étanchéité, avec un premier élément de machine (1) présentant une structure réceptrice de joint d'étanchéité, de préférence une rainure, avec un deuxième élément de machine (3) présentant une surface d'étanchéité (2) et mobile par rapport au premier élément de machine (1), et avec un joint d'étanchéité pour étancher la surface d'étanchéité (2) entre le premier élément de machine (1) et le deuxième élément de machine (3),
sachant que le joint d'étanchéité est réalisé annulaire sous forme de bague radiale d'étanchéité d'arbre,
sachant que le joint d'étanchéité présente un élément de maintien (5), par lequel le joint d'étanchéité est disposé dans la structure réceptrice de joint d'étanchéité en étant fixé en position,
sachant que le joint d'étanchéité présente une lèvre d'étanchéité (6) formée sur l'élément de maintien (5), constituée d'un matériau élastomère et pourvue d'une arête d'étanchéité (7) façonnée à une extrémité libre de la lèvre d'étanchéité (6),
sachant que l'arête d'étanchéité (7) s'applique avec précontrainte contre la surface d'étanchéité (2) par l'élasticité du matériau élastomère de la lèvre d'étanchéité (6), de telle sorte que le joint d'étanchéité étanche par rapport à une région basse pression une région haute pression située entre les éléments de machine (1, 3),
sachant que la lèvre d'étanchéité (6) présente une région de surface haute pression (10) limitrophe de la région haute pression et une région de surface basse pression (11) limitrophe de la région basse pression,
**caractérisé en ce que** le joint d'étanchéité ne présente dans la région de sa lèvre d'étanchéité qu'un corps de soutien rigide (15), sachant que le corps de soutien forme un appui de la lèvre d'étanchéité (6) situé du côté de la surface basse pression et s'étendant sensiblement parallèlement à l'arête d'étanchéité (7),
sachant que l'appui est disposé entre l'arête d'étanchéité (7) et l'élément de maintien (5), et qu'il divise la région de surface haute pression (10) de la lèvre d'étanchéité (6) en une surface partielle coté élément de maintien et une surface partielle côté arête d'étanchéité, sachant que la région de surface basse pression (11) de la lèvre d'étanchéité (6), entre l'appui et l'élément de maintien (5), est limitrophe d'un espace libre à l'intérieur duquel la lèvre d'étanchéité (6) peut être enfoncée par sa déformation,
sachant que l'espace libre est délimité par la région de surface basse pression (11) de la lèvre d'étanchéité (6) et par le deuxième élément de machine,
et sachant que la surface partielle côté élément de maintien de la région de surface haute pression (10) est plus grande que la surface partielle côté arête d'étanchéité, de sorte que, lorsque la région de surface haute pression (10) est sollicitée en pression, un moment de basculement agissant autour de l'appui et soulageant l'arête d'étanchéité (7) est exercé sur la lèvre d'étanchéité (6).

2. Système d'étanchéité selon la revendication 1, **caractérisé en ce que** le corps de soutien (15) est au moins partiellement incorporé dans la lèvre d'étanchéité (6).

3. Système d'étanchéité selon la revendication 1 ou 2, **caractérisé en ce que** la lèvre d'étanchéité (6) est réalisée avec un matériau renforcé dans sa région qui est limitrophe de l'appui.

4. Système d'étanchéité selon l'une des revendications 1 à 3, **caractérisé en ce que** le corps de soutien (15) présente une section circulaire ou **en ce que** le corps de soutien (15) présente une section essentiellement en forme de T, sachant que la barre transversale du T dépasse au moins partiellement hors de la région de surface basse pression (11).

5. Système d'étanchéité selon l'une des revendications 1 à 4, **caractérisé en ce que** l'élément de maintien (5) présente un élément de renforcement (8) ayant de préférence une section en forme de L.

6. Système d'étanchéité selon la revendication 5, **caractérisé en ce que** l'élément de renforcement (8) est au moins partiellement entouré par le matériau élastomère de la lèvre d'étanchéité (6).

7. Système d'étanchéité selon l'une des revendications 1 à 6, **caractérisé en ce que** le corps de soutien (15) et/ou l'élément de renforcement (8) sont fabriqués en métal ou en matière plastique ou en un matériau céramique.
